# EUROPÄISCHE PATENTSCHRIFT

(11) **EP 1 526 768 B1**
(45) Veröffentlichungstag und Bekanntmachung des Hinweises auf die Patenterteilung: **29.12.2010**
(21) Anmeldenummer: 03792183.0
(22) Anmeldetag: 09.07.2003
(51) Int. Cl.: A01C 19/00, F16D 1/08

(54) **GETRIEBEANORDNUNG**
GEARBOX ARRANGEMENT
ENSEMBLE TRANSMISSION

(30) Priorität: 08.08.2002 US 214969
(43) Veröffentlichungstag der Anmeldung: 04.05.2005
(73) Patentinhaber: DEERE & COMPANY, Moline, Illinois 61265-8098 (US)
(72) Erfinder: FRIESTAD, Michael, Eric, Rock Island, IL 61201 (US); MARIMAN, Nathan, Albert, Geneseo, IL 61254 (US)
(74) Vertreter: Holst, Sönke
(86) Internationale Anmeldenummer: PCT/EP2003/007371
(87) Internationale Veröffentlichungsnummer: WO 2004/017714

(56) Entgegenhaltungen:
- DE-A- 19 634 860
- GB-A- 899 733
- US-A- 3 620 419
- US-A- 4 587 909
- US-A- 4 779 471

## Beschreibung

### Technisches Gebiet

Die Erfindung betrifft eine Getriebeanordnung zum Antrieb eines Hilfsgerätes, mit einer mit dem Hilfsgerät verbundenen Eingangswelle und mit einem Getriebe, welches einen Getriebeausgang, der mit einer eine Rotationsausgangsbewegung liefernden mehrkantigen Antriebsöffnung versehen ist, und eine eine Antriebskupplung enthaltende Antriebswelle aufweist. Die Antriebskupplung enthält eine ringförmige, sich axial erstreckende Bohrung, welche die Eingangswelle aufnimmt, wobei sich zwischen Antriebswelle und Eingangswelle ein leicht lösbarer Anschlussstift erstreckt, welcher die Antriebswelle an die Eingangswelle antreibend sichert.

### Stand der Technik

Flexible drehbare Antriebswellen werden in verschiedenen Anwendungen eingesetzt, um Drehmomente von einem Ort zu einem anderen zu übertragen. Üblicherweise enthalten flexible drehbare Antriebswellen ein steckerförmiges Verbindungselement, um in ein buchsenförmiges Verbindungselement an einem Getriebe einzugreifen. Wenn das steckerförmige Verbindungselement in einer in das buchsenförmige Verbindungselement eingerückten Stellung ist, steht die flexible drehbare Antriebswelle in einer antreibenden Verbindung zu dem Getriebe. Das Getriebe wiederum ist durch eine Getriebeanordnung antreibend an ein angetriebenes Element gekoppelt. Gelegentlich ist es notwendig den Antriebsstrang zu entkoppeln. Ein Möglichkeit besteht darin, die flexible drehbare Antriebswelle von dem Getriebe zu entkoppeln. Dabei ist es von Nachteil, dass das steckerförmige Verbindungselement der flexiblen Antriebswelle bei einer derartigen Entkopplung Schmutz und anderen Verunreinigungen ausgesetzt wird.

Die US 718 664 A, US-3 620 419 und die US 4 779 471 A offenbaren den Einsatz von flexiblen drehbaren Antriebswellen bei landwirtschaftlichen Sämaschinen.

### Aufgabe der Erfindung

Die der Erfindung zu Grunde liegende Aufgabe wird darin gesehen, eine Getriebeanordnung der eingangs genannten Art anzugeben, durch welches die vorgenannten Probleme überwunden werden.

### Beschreibung der Erfindung

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß wird eine Getriebeanordnung der eingangs genannten Art mit einer mehrkantigen Hülse versehen, welche auf der Antriebswelle montiert und gesichert ist, wobei die mehrkantige Hülse von der Antriebsöffnung aufgenommen wird und antreibend in dem Getriebe eingreift. Dadurch wird gewährleistet, dass ein Abkoppeln des Antriebsstrangs zwischen der flexiblen drehbaren Antriebswelle und der Eingangswelle der Dosiervorrichtung ohne Abkoppeln der flexiblen drehbaren Antriebswelle vom Getriebe erfolgen kann. Auf diese Weise wird verhindert, dass das steckerförmige Verbindungselement der flexiblen drehbaren Antriebswelle Schmutz und anderen Verunreinigungen ausgesetzt wird.

Die Getriebeanordnung enthält eine Antriebskupplung, welche im Ausführungsbeispiel eine ringförmige sich axial erstreckende Bohrung aufweist, in die eine als Spindel ausgebildete Eingangswelle eines Hilfsgerätes aufgenommen wird. Die Getriebeanordnung ist an die Eingangswelle eines angetriebenen Gerätes gekoppelt. Die Getriebeanordnung enthält eine Antriebswelle auf der eine mehrkantige Hülse montiert ist. Die mehrkantige Hülse ist über einen Splint mit der Antriebswelle verstiftet. Der Splint definiert eine Drehmomentübertragungsgrenze und bietet dadurch eine Drehmomentsicherung.

Die Bohrung ist mit zueinander ausgerichteten, sich quer erstreckenden und die Bohrung durchlaufenden Öffnungen versehen. Die Spindel ist auch mit einer sich quer erstreckenden Bohrung versehen, welche zu den sich quer erstreckenden Öffnungen an der Antriebskupplung ausgerichtet ist. Ein durch die zueinander ausgerichteten Öffnungen und die Bohrung gesteckter leicht lösbarer Anschlussstift koppelt dabei antreibend die Antriebskupplung an die Eingangswelle. In einem erfindungsgemäßen Ausführungsbeispiel ist der Anschlussstift ein Federstecker.

In einem erfindungsgemäßen Ausführungsbeispiel ist die mehrkantige Hülse eine Sechskanthülse. Die Sechskanthülse wird durch einen Getriebeausgang angetrieben. Der Getriebeausgang ist mit einer sechskantigen Antriebsöffnung versehen, in welche die sechskantige Hülse aufgenommen ist.

In einem erfindungsgemäßen Ausführungsbeispiel ist ein durch eine flexible Antriebswelle angetriebenes Getriebe über eine Getriebeanordnung an eine Dosiervorrichtung gekoppelt.

In einem weiteren erfindungsgemäßen Ausführungsbeispiel ist die Eingangswelle die Spindel einer Dosiervorrichtung, wobei die Spindel in die Bohrung der Antriebskupplung aufgenommen wird.

### Beschreibung der Zeichnungen

Anhand der Zeichnungen, die ein Ausführungsbeispiel der Erfindung zeigen, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine perspektivische Ansicht einer Sämaschine mit einer einzelnen Pflanzeinheit von hinten,
- Fig. 2: eine Querschnittsansicht eines Getriebes und einer drehbaren Antriebswelle, wobei sich die Antriebswelle in ihrer eingerückten Stellung befindet,
- Fig. 3: eine perspektivische Vergrößerungsansicht des Getriebes,
- Fig. 4: eine Querschnittsansicht des Getriebes, eines Antriebselements und eines Eingangsteils und
- Fig. 5: eine Querschnittsansicht eines Federstiftes entlang der Linie 5-5 aus Fig. 4.

### Detaillierte Beschreibung zur Ausführung der Erfindung

Eine Sämaschine 10 enthält eine einzelne Reihensäeinheit, welche mittels U-förmiger Schrauben, die mit einer Montageplatte 12 in Eingriff stehen, an einen querliegenden Werkzeugträger (nicht gezeigt) montiert ist. Die Säeinheit ist mit einem Rahmen 14 versehen, der über ein Parallelogrammgestänge 16 an die Montageplatte 12 gekoppelt ist. Das Parallelogrammgestänge erlaubt ein begrenztes Heben und Senken der Säeinheit relativ zum Werkzeugträger. Durch ein pneumatisches bedarfsgesteuertes Saatgutabgabesystem wird automatisch Saatgut zu der Säeinheit geleitet. Das bedarfsgesteuerte Saatgutabgabesystem leitet das Saatgut pneumatisch von einem Haupttrichter (nicht gezeigt) durch eine Saatgutleitung 18 zu einen auf dem Rahmen 14 montierten Hilfsbehälter 20. Das im Hilfsbehälter 20 befindliche Saatgut wird mittels einer Dosiervorrichtung 22 dosiert und durch ein Saatgutrohr in eine Säfurche geleitet (nicht gezeigt).

Die Säfurche wird durch einen Doppelscheiben-Furchenöffner 24 mit Tiefeneinstellrädern 26 geformt. Die Tiefe der Säfurche wird durch Positionierung des Hebels 28 eingestellt, mit dem die vertikale Position der Tiefeneinstellräder 26 relativ zum Furchenöffner 24 regulierbar ist. Die Säfurche mit dem durch das Saatgutrohr darin abgelegten dosierten Saatgut wird mittels Furchenschließrädern 30 geschlossen. Ein davor montiertes Scheibensech 32 dient zur Zerkleinerung von Pflanzenrückständen bevor diese auf den Furchenöffner 24 treffen.

Die Dosiervorrichtung 22 wird durch eine flexible drehbare Antriebswelle 40, welche ein Getriebe 42 antreibt, angetrieben.

Die flexible und drehbare Antriebswelle 40 entspricht einer Ausführung, wie sie von der Elliot Manifacturing Company, LLC, Bermingham, New York hergestellt und vermarktet wird. Ein durch Bodenhaftung angetriebenes Getriebe (nicht gezeigt) liefert ein Eingangsdrehmoment an die flexible Antriebswelle 40. Auf diese Weise wird die Drehzahl der Dosiervorrichtung 22 durch die Fahrgeschwindigkeit der Sämaschine 10 gesteuert. Die flexible drehbare Antriebswelle enthält eine flexible Ummantelung und einen drehbaren inneren Kern. Das Ende der flexiblen drehbaren Antriebswelle 40 ist mit einem steckerförmigen Verbindungselement 44 versehen, welches eine Einsteckhülse 46 und ein mit einer planen Fläche versehenes drehbares Antriebssteckelement 48 enthält. Die Einsteckhülse 46 ist als Metallbuchse ausgebildet, wobei die Metallbuchse eine Umfangsnut 50 enthält.

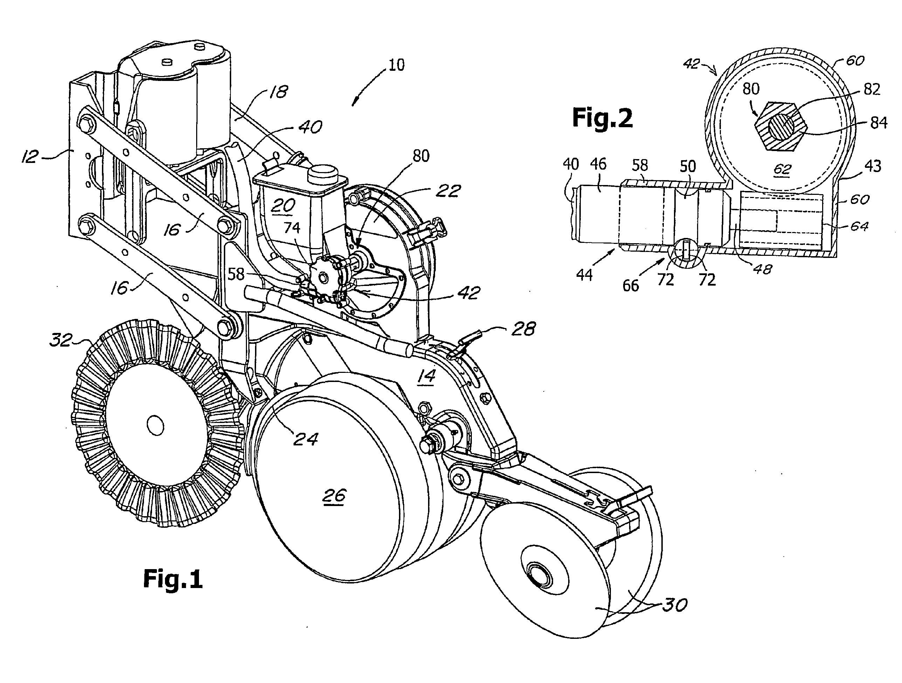

Das Getriebe 42 enthält ein Getriebegehäuse 43 mit einem Einsteckbereich 58, der die Einsteckhülse 46 aufnimmt und einem Zahnradbereich 60, der Zahnräder 62, 64 aufnimmt. In dem Zahnradbereich 60 des Gehäuses 43 sind zwei schrägverzahnte Zahnräder 62, 64 montiert. Das erste schrägverzahnte Zahnrad 62 ist durch ein Antriebselement 80 antreibend mit der Dosiervorrichtung 22 gekoppelt. Das zweite schrägverzahnte Zahnrad 64 ist antreibend mit dem ersten schrägverzahnten Zahnrad 62 gekoppelt. Das zweite schrägverzahnte Zahnrad 64 ist mit einer mehrkantigen Bohrung versehen, welche das. Antriebssteckelement 48 der flexiblen drehbaren Antriebswelle 40 aufnimmt. Wenn die Antriebswelle 40 in ihrer eingerückten Stellung ist, wie es in Fig. 2 dargestellt wird, wird das zweite schrägverzahnte Zahnrad 64 von der flexiblen drehbaren Antriebswelle 40 angetrieben.

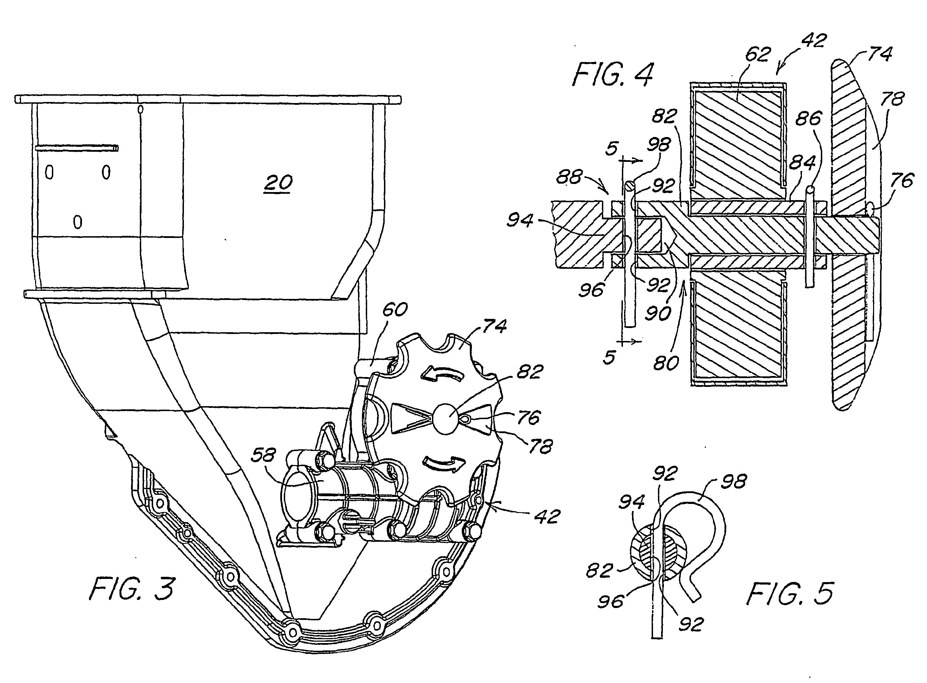

Der zylindrische Einsteckbereich 58 ist mit einer Arretiervorrichtung 66 versehen, welche einen querverlaufenden Bolzen enthält. In dem in Figur 2 bis 4 dargestellten Ausführungsbeispiel ist der Bolzen drehbar in einer Querbohrung positioniert, die sich im Einsteckbereich 58 des Getriebegehäuses 43 befindet. Der Bolzen enthält ein erstes Ende, mit zwei Greifflächen 72 zum Erfassen durch einen Bediener. Der Bolzen kann in eine Sperrstellung und in eine Freigabestellung gedreht werden. Um den Bolzen zwischen den Stellungen zu bewegen, greift ein Bediener an die Greifflächen 72 und drückt den Bolzen nach innen. Der Bolzen wird dann in die gewünschte Stellung gedreht. Der Bolzen enthält eine Umfangsoberfläche, welche die Sperrstellung definiert, und einen ausgesparten Bereich, welcher die Freigabestellung definiert. In der Sperrstellung greift die Umfangsoberfläche in die Umfangsnut 50 ein und verriegelt die drehbare Antriebswelle 40 in ihrer eingerückten Stellung. In der Freigabestellung gibt der ausgesparte Bereich die Einsteckhülse 46 frei und erlaubt eine axiale Verschiebung der Einsteckhülse 46 innerhalb des Einsteckbereichs 58 des Getriebegehäuses 43 bis diese vom Getriebe entkoppelt ist. Um eine Positionierung der Einsteckhülse 46 innerhalb des Einsteckbereichs 58 des Getriebegehäuses 43 zu vereinfachen, kann die Einsteckhülse 46 mit sichtbaren Markierungen versehen sein. Wenn die Markierung mit dem Rand des Einsteckbereichs 58 des Getriebegehäuses 43 ausgerichtet ist, befindet sich die Umfangsnut 50 der Einsteckhülse 46 in einer korrekten axialen Stellung für einen Eingriff durch die Umfangsfläche des Bolzens.

Das Antriebselement 80 enthält eine Antriebswelle 82 auf der eine mehrkantige Hülse 84 montiert ist. Die mehrkantige Hülse 84 ist über einen Splint 86 mit der Antriebswelle 82 verstiftet. Der Splint 86 definiert eine Drehmomentübertragungsgrenze und bietet dadurch eine Drehmomentsicherung. Im dargestellten Ausführungsbeispiel ist die mehrkantige Hülse 84 eine Sechskanthülse.

Die Sechskanthülse 84 wird durch einen Getriebeausgang angetrieben, welcher durch eine mehrkantige Öffnung im Zahnrad 62, in welche die Sechskanthülse 84 aufgenommen wird, definiert ist. Die Antriebswelle 82 ist mit einer Antriebskupplung 88 versehen. In dem dargestellten Ausführungsbeispiel enthält die Antriebskupplung 88 eine ringförmige sich axial erstreckende Bohrung 90 mit zueinander ausgerichteten sich quer durch die Bohrung 90 erstreckenden Öffnungen 92. Die Antriebskupplung 88 ist mit einer Eingangswelle eines angetriebenen Gerätes verbunden. Im dargestellten Ausführungsbeispiel ist die Eingangswelle als Spindel 94 einer Dosiervorrichtung 22 ausgebildet. Die Spindel 94 ist in der Bohrung 90 aufgenommen. Die Spindel 94 ist ebenfalls mit einer sich quer erstreckenden Bohrung 96 versehen, welche zu den sich quer erstreckenden Öffnungen 92 an der Antriebskupplung 88 ausgerichtet ist. Ein leicht lösbarer Anschlussstift 98 ist durch die zueinander ausgerichteten Öffnungen 92 und durch die Bohrung 96 gesteckt, wodurch dieser die Antriebskupplung 88 antreibend mit der Eingangswelle verbindet. In dem dargestellten Ausführungsbeispiel ist der Anschlussstift 98 ein Federstecker.

Für ein manuelles Drehen des Getriebes 42 ist ein Bedienungsknauf 74 mit der Antriebswelle 82 antreibend verbunden. Zusätzlich kann dieser Knauf 74 dazu genutzt werden, das zweite schrägverzahnte Zahnrad. 64 derart zu bewegen, dass es das Antriebssteckelement 48 erfasst, wenn dieses in das Getriebegehäuse 43 hineingesteckt wird. Der Bedienungsknauf 74 ist über einen Splint 76 antreibend mit der Antriebswelle 82 verbunden, welcher in einer auf der äußeren Oberfläche des Bedienungsknaufs 74 ausgebildeten Ausnehmung 78 fixiert ist.

Wenn ein Bediener den Antriebsstrang von der flexiblen drehbaren Antriebswelle 40 und der Dosiervorrichtung 22 trennen muss, entfernt der Bediener den leicht lösbaren Anschlussstift 98 und entfernt dann durch Ziehen am Bedienknauf 74 das Antriebselement 80. Das Antriebselement 80 und der leicht lösbare Anschlussstift 98 können dann verwahrt werden, bis die Dosiervorrichtung 22 wieder angeschlossen werden muss.

## Patentansprüche

1. Getriebeanordnung zum Antrieb eines Hilfsgerätes (22), mit einer mit dem Hilfsgerät (22) verbundenen Eingangswelle (94) und mit einem Getriebe (42), welches einen Getriebeausgang, der mit einer eine Rotationsausgangsbewegung liefernden mehrkantigen Antriebsöffnung versehen ist, und eine eine Antriebskupplung (88) enthaltende Antriebswelle (82) aufweist, wobei die Antriebskupplung (88) eine ringförmige, sich axial erstreckende Bohrung (90) enthält, welche die Eingangswelle (94) aufnimmt und wobei sich zwischen Antriebswelle (82) und Eingangswelle (94) ein leicht lösbarer Anschlussstift (98) erstreckt, welcher die Antriebswelle (82) an die Eingangswelle (94) antreibend sichert, **dadurch gekennzeichnet, dass** eine mehrkantige Hülse (84) auf der Antriebswelle (82) montiert und gesichert ist, wobei die mehrkantige Hülse (84) von der Antriebsöffnung aufgenommen wird und antreibend in dem Getriebe (42) eingreift.

2. Getriebeanordnung nach Anspruch 1, **dadurch gekennzeichnet, dass** die mehrkantige Hülse (84) durch einen Scherstift (86) auf der Antriebswelle (82) gesichert ist, durch welchen eine Drehmomentübertragungsgrenze definiert wird.

3. Getriebeanordnung nach Anspruch 1 oder 2, **dadurch gekennzeichnet, dass** die Antriebswelle (82) nahe der sich axial erstreckenden Bohrung (90) mit zwei sich quer erstreckenden Öffnungen (92) versehen ist und die Eingangswelle (94) mit einer sich quer erstreckenden Bohrung (96) versehen ist, welche zu den sich quer erstreckenden Öffnungen (92) ausgerichtet ist, um den leicht lösbaren Anschlussstift (98) aufzunehmen.

4. Getriebeanordnung nach einem der vorhergehenden Ansprüche, **dadurch gekennzeichnet, dass** ein Bedienungsknauf (74) enthalten ist, welcher an die Antriebswelle (82) montiert ist.

5. Getriebeanordnung nach Anspruch 4, **dadurch gekennzeichnet, dass** der Bedienungsknauf (74) durch einen Splint (76) montiert ist.

6. Getriebeanordnung nach einem der vorhergehenden Ansprüche, **dadurch gekennzeichnet, dass** die mehrkantige Hülse (84) eine Sechskanthülse ist.

7. Getriebeanordnung nach einem der vorhergehenden Ansprüche, **dadurch gekennzeichnet, dass** die mehrkantige Antriebsöffnung eine Sechskantbohrung ist.

8. Sämaschine (10) zum Pflanzen von Getreide, mit einem Rahmen (14), einer an den Rahmen montierten Dosiervorrichtung (22) zur Dosierung des zu pflanzenden Saatguts, wobei die Dosiervorrichtung (22) eine Eingangswelle (94) enthält, einem an den Rahmen (14) montierten Furchenöffner(24), welcher eine Pflanzfurche auf einem Feld ausbildet, in die dosiertes Saatgut aus der Dosiervorrichtung (22) geleitet wird, und einem an den Rahmen (14) montierten Getriebe (42), wobei das Getriebe (42) durch eine flexible drehbare Antriebswelle (40) angetrieben und wirkend mit der Eingangswelle (94) der Dosiervorrichtung (22) über eine Getriebeanordnung gemäß einem der Ansprüche 1 bis 7 verbunden ist.

## Claims

1. Transmission arrangement for driving an auxiliary appliance (22), having an input shaft (94) connected to the auxiliary appliance (22), and having a transmission (42), which has a transmission output provided with a polygonal drive opening that supplies a rotational output motion and which has a drive shaft (82) that includes a drive coupling (88), the drive coupling (88) including an axially extending annular hole (90), which receives the input shaft (94), and a readily removable connection pin (98), which secures the drive shaft (82) to the input shaft (94) in a driving manner, extending between the drive shaft (82) and the input shaft (94), **characterized in that** a polygonal sleeve (84) is mounted and secured on the drive shaft (82), the polygonal sleeve (84) being received by the drive opening and engaging in a driving manner in the transmission (42).

2. Transmission arrangement according to Claim 1, **characterized in that** the polygonal sleeve (84) is secured on the drive shaft (82) by a shear pin (86), which defines a torque transmission limit.

3. Transmission arrangement according to Claim 1 or 2, **characterized in that**, close to the axially extending hole (90), the drive shaft (82) is provided with two transversely extending openings (92) and the input shaft (94) is provided with a transversely extending hole (96), which is aligned with the transversely extending openings (92) in order to receive the readily removable connection pin (98).

4. Transmission arrangement according to one of the preceding claims, **characterized in that** the arrangement includes an operating knob (74), which is mounted to the drive shaft (82).

5. Transmission arrangement according to Claim 4, **characterized in that** the operating knob (74) is mounted by means of a split pin (76).

6. Transmission arrangement according to one of the preceding claims, **characterized in that** the polygonal sleeve (84) is a hexagonal sleeve.

7. Transmission arrangement according to one of the preceding claims, **characterized in that** the polygonal drive opening is a hexagonal hole.

8. Sowing machine (10) for planting cereals, having a frame (14), a metering device (22), mounted to the frame, for metering the seed to be planted, the metering device (22) including an input shaft (94), a furrow opener (24), which is mounted to the frame (14) and forms a seed trench in a field, into which metered seed from the metering device (22) is directed, and a transmission (42) mounted to the frame (14), the transmission (42) being driven by a flexible rotatable drive shaft (40) and being operatively connected to the input shaft (94) of the metering device (22) by a transmission arrangement in accordance with one of Claims 1 to 7.

## Revendications

1. Ensemble de transmission pour l'entraînement d'un appareil auxiliaire (22), avec un arbre d'entrée (94) relié à l'appareil auxiliaire (22) et avec une transmission (42), qui présente une sortie de transmission, qui est dotée d'une ouverture d'entraînement polygonale produisant un mouvement de sortie rotatif, et un arbre d'entraînement (82) comportant un accouplement d'entraînement (88), dans lequel l'accouplement d'entraînement (88) comprend un alésage annulaire s'étendant axialement (90), qui contient l'arbre d'entrée (94) et dans lequel une goupille d'assemblage (98) aisément amovible s'étend entre l'arbre d'entraînement (82) et l'arbre d'entrée (94), laquelle solidarise en mouvement d'entraînement l'arbre d'entraînement (82) avec l'arbre d'entrée (94), **caractérisé en ce qu'**une douille polygonale (84) est montée et est fixée sur l'arbre d'entraînement (82), dans lequel la douille polygonale (84) est logée dans l'ouverture d'entraînement et s'engage en mouvement d'entraînement dans la transmission (42).

2. Ensemble de transmission selon la revendication 1, **caractérisé en ce que** la douille polygonale (84) est fixée sur l'arbre d'entraînement (82) au moyen d'une goupille de cisaillement (86), au moyen de laquelle on définit une limite de transmission de couple de rotation.

3. Ensemble de transmission selon la revendication 1 ou 2, **caractérisé en ce que** l'arbre d'entraînement (82) est pourvu de deux ouvertures (92) s'étendant transversalement à proximité de l'alésage s'étendant axialement (90) et l'arbre d'entrée (94) est pourvu d'un alésage s'étendant transversalement (96), qui est aligné avec les ouvertures s'étendant transversalement (92), afin de recevoir la goupille d'assemblage aisément amovible (98).

4. Ensemble de transmission selon l'une quelconque des revendications précédentes, **caractérisé en ce qu'**il comporte un bouton de commande (74), qui est monté sur l'arbre d'entraînement (82).

5. Ensemble de transmission selon la revendication 4, **caractérisé en ce que** le bouton de commande (74) est monté au moyen d'une goupille fendue (76).

6. Ensemble de transmission selon l'une quelconque des revendications précédentes, **caractérisé en ce que** la douille polygonale (84) est une douille hexagonale.

7. Ensemble de transmission selon l'une quelconque des revendications précédentes, **caractérisé en ce que** l'ouverture d'entraînement polygonale est une ouverture hexagonale.

8. Semoir (10) pour planter des céréales, avec un châssis (14), un dispositif de dosage (22) monté sur le châssis pour le dosage des semences à planter, dans lequel le dispositif de dosage (22) comprend un arbre d'entrée (94), avec un soc sillonneur (24) monté sur le châssis (14), qui forme un sillon de plantation sur un champ, dans lequel les semences dosées sont conduites à partir du dispositif de dosage (22), et avec une transmission (42) montée sur le châssis (14), dans lequel la transmission (42) est entraînée par un arbre d'entraînement rotatif flexible (40) et est reliée activement à l'arbre d'entrée (94) du dispositif de dosage (22) par un ensemble de transmission selon l'une quelconque des revendications 1 à 7.
